# EUROPEAN PATENT SPECIFICATION

(11) **EP 4 020 948 B1**
(45) Date of publication and mention of the grant of the patent: **27.12.2023**
(21) Application number: 20915899.7
(22) Date of filing: 11.11.2020
(51) Int. Cl.: H04M 1/02, H04M 1/03, H04R 1/34, H04R 1/02

(54) **ELECTRONIC DEVICE**
ELEKTRONISCHE VORRICHTUNG
DISPOSITIF ÉLECTRONIQUE

(30) Priority: 21.01.2020 CN 202020145149 U
(43) Date of publication of application: 29.06.2022
(73) Proprietor: Honor Device Co., Ltd., Shenzhen, Guangdong 518040 (CN)
(72) Inventor: FENG, Lei, Shenzhen, Guangdong 518040 (CN); ZHANG, Wei, Shenzhen, Guangdong 518040 (CN); GUO, Renwei, Shenzhen, Guangdong 518040 (CN); WEI, Yameng, Shenzhen, Guangdong 518040 (CN)
(74) Representative: Epping - Hermann - Fischer
(86) International application number: PCT/CN2020/128162
(87) International publication number: WO 2021/147472

(56) References cited:
- WO-A1-2013/005073
- CN-A- 108 574 919
- CN-A- 109 951 582
- CN-A- 110 166 610
- CN-U- 211 266 908
- US-A1- 2005 233 781

## Description

### TECHNICAL FIELD

This application relates to the field of electronic technologies, and in particular, to an electronic device.

### BACKGROUND

Currently, as consumers have requirements for greater visual experience and comfortable holding feeling on electronic devices, full-screen electronic devices have emerged. A full-screen mobile phone is used as an example. To increase a screen-to-body ratio of the electronic device, a space for a receiver of the electronic device is constantly reduced. In addition, as 3D screens have emerged, structural design of the electronic device is further limited. Therefore, a new receiver sound outlet structure of the electronic device needs to be designed to meet the requirements for appearance and quality of the full-screen electronic device.

CN108462775 provided a receiver apparatus and a terminal. In this application, a sound guide support is forward pressed on a sealing layer on an upper surface of a metal housing to seal a sound cavity. In addition, forward pressing assembly of the sound cavity can be implemented. However, in this solution, the large-size sound guide support needs to be added separately to seal a receiver. A sound outlet channel is integrated with the sound guide support to occupy a space on an edge of a frame and a display screen, so that a sound outlet of the receiver is larger, and a black edge of the display screen is increased, causing a decline of strength of a middle frame and a decrease of a display area.

Document US 2005/233781 A1 describes a communication terminal including a housing carrying therein a radio antenna element, a speaker, and a chamber that acts as an electromagnetic resonance cavity for the antenna and as an acoustic resonance cavity for the speaker. The speaker is mounted inside the chamber and is coupled to the outside of the housing through a sound channel. The terminal includes a user interface on a front side of the housing and the speaker is placed behind the user interface as viewed from the front side, with the sound channel extending from a channel inlet at the speaker to a channel front outlet at the front side.

Document CN 108 574 919 A describes a mobile terminal comprising a shell, a receiver, a first display module and a second display module.

In view of this, this application is hereby put forward.

### SUMMARY

In view of the problem existing in the background, an objective of this application is to provide an electronic device, so as to increase a screen-to-body ratio of a display screen and provide good user experience. The present invention is defined by the attached set of claims.

An electronic device, including:
a frame body provided with a sound cavity, where the sound cavity includes a sound inlet and a sound outlet;
a receiver, where a sound outlet surface of the receiver covers the sound inlet;
a cover body covering the sound outlet, where a sound outlet channel communicating with the sound cavity is formed between the cover body and the frame body; and
a display screen connected to the cover body and a side of the frame body away from the receiver.

The sound outlet channel is not integrated with the cover body, and after the cover body and the frame body are assembled, a gap communicating with the sound cavity is provided between the cover body and the frame body to form the sound outlet channel, so as to significantly reduce a space occupied by the cover body, thereby increasing a size of the display screen and increasing a screen-to-body ratio of the display screen, and user experience is good.

The frame body includes a vertical part and a horizontal part that are connected to each other.

The sound cavity is provided on the horizontal part, and the cover body and the vertical part form the sound outlet channel.

The cover body and the vertical part cooperate to enable the formed sound outlet channel to be perpendicular to the display screen but not inclined, so as to avoid that when a user uses the electronic device, the sound outlet channel leaves an ear, and the user complains about a low volume and poor sound reception of the electronic device.

The cover body includes a vertical cover body and a horizontal cover body that are connected to each other.

The horizontal cover body covers at least a part of the sound outlet, and the sound outlet channel is formed between the vertical cover body and the vertical part.

The vertical cover body and the vertical part cooperate to form the sound outlet channel perpendicular to the display screen, so that it can be ensured to the maximum extent that the user clearly receives sound generated by the receiver.

In a possible embodiment, supporting parts are provided on either of the vertical cover body and the vertical part, and the supporting parts are disposed between the vertical cover body and the vertical part in a supporting manner.

In the foregoing embodiment, the supporting parts are disposed between the vertical cover body and the vertical part to support the vertical cover body and the vertical part, and a gap with a specific width is reserved to form the sound outlet channel. With arrangement of the supporting parts, reliability of the sound outlet channel in a deformation process is enhanced, and a stable structure of the sound outlet channel between the vertical cover body and the vertical part is ensured.

In a possible embodiment, the electronic device includes a plurality of supporting parts, where in a length direction of the vertical cover body, the plurality of supporting parts are arranged at intervals.

In the foregoing embodiment, the plurality of supporting parts are arranged at intervals, so that the vertical cover body cooperates with the vertical part in a supported manner on a plurality of positions, structural stability between the vertical cover body and the vertical part is ensured, and deformation hardly occurs.

A longitudinal section of the supporting parts is rectangular. Considering that the supporting parts are located on the sound outlet channel, to reduce sound loss caused by the supporting parts in a sound transmission process, a sectional dimension of the supporting parts is designed to increase linearly, so that acoustic resistance does not change suddenly.

In a possible embodiment, the supporting part includes a supporting body, where the supporting body extends in a direction perpendicular to the horizontal cover body.

A sharp corner part is provided on an end of the supporting body close to the horizontal cover body.

In a possible embodiment, surfaces of two sides of the end of the supporting body close to the horizontal cover body include and converge towards each other to form the sharp corner part.

In a possible embodiment, two side surfaces of the sharp corner part are arc surfaces, and a longitudinal section profile line of the sharp corner part is a top-opening parabola.

In the foregoing embodiment, based on the linear change, a structure of the supporting parts is further optimized. A fluid mechanics analysis of the acoustic resistance change in the sound outlet channel shows that the acoustic resistance change has a quadratic inverse relationship with the cross-sectional width. Therefore, the sharp corner part at a bottom of the supporting body is designed to be arc-shaped and parabola-shaped, so that an acoustic resistance increase caused by a unit section width increase changes linearly with a height in which the supporting parts are located.

In a possible embodiment, the electronic device includes a waterproof breathable film, where the waterproof breathable film is connected to the supporting parts and blocks the sound outlet channel.

In a possible embodiment, the supporting part includes a longitudinal convex strip and a connection convex strip, where the connection convex strip is connected to the vertical cover body, the longitudinal convex strip is connected to the connection convex strip, and the waterproof breathable film is connected to the connection convex strips and the longitudinal convex strips.

In the foregoing embodiment, a cross section of the supporting parts is T-shaped, bottom end surfaces of the supporting parts are also T-shaped surfaces, and the waterproof breathable film is connected to the T-shaped surfaces. This solution increases an area of the supporting parts in contact with the waterproof breathable film and facilitates connection stability of the waterproof breathable film.

In a possible embodiment, a horizontal slot is provided on the horizontal part, and the horizontal cover body is embedded in the horizontal slot.

In the foregoing embodiment, after the horizontal cover body is embedded and mounted in the horizontal slot, an upper surface of the horizontal cover body and an upper surface of the horizontal part are located on a same plane, and the display screen may be mounted on the horizontal cover body and the horizontal part in an attached manner, so that stability of a mounting structure of the display screen is improved.

In a possible embodiment, bosses are provided on the horizontal part, and the vertical cover body is supported on the bosses.

In the foregoing embodiment, the bosses are provided on the horizontal part, so that the vertical cover body is supported, and the horizontal cover body is supported on the horizontal slot. In this solution, one end of the cover body is supported on the horizontal slot, the other end is supported on the bosses, and the two ends of the cover body are both supported, so that the cover body is stable in assembly structure, the sound outlet channel formed between the cover body and the vertical part is stable in structure and free from deformation, and sound transmission of the receiver is ensured.

In a possible embodiment, the bosses are provided with first inclined surface parts, the vertical cover body is provided with second inclined surface parts, and the second inclined surface parts are supported on the first inclined surface parts in an attached manner.

In the foregoing embodiment, the bosses support and cooperate with the vertical cover body by using inclined surfaces, and the inclined surfaces have supporting and limiting effects, so that stability of the mounting structure is higher.

In a possible embodiment, the vertical cover body includes a first plate body and a second plate body.

A thickness of the first plate body is greater than that of the second plate body.

The first plate body is vertically connected to the horizontal cover body, and the second plate body is connected to the first plate body on a top edge of the first plate body.

The second inclined surface parts are provided on the first plate body.

In a possible embodiment, a vertical slot is provided on the vertical part, the vertical cover body is embedded in the vertical slot, and the sound outlet channel is formed between the vertical cover body and a bottom wall of the vertical slot.

In the foregoing embodiment, the vertical cover body is embedded in the vertical slot, and two side wall surfaces of the vertical slot limit the vertical cover body and prevent the vertical cover body from shaking, so as to enhance stability of the assembly structure.

In a possible embodiment, the electronic device further includes a diversion cavity, where the diversion cavity is provided in a corner between the horizontal part and the vertical part and communicates with the sound cavity and the sound outlet channel.

In a possible embodiment, a plurality of convex ribs are provided on a bottom surface of the horizontal cover body, and the plurality of convex ribs are supported on the horizontal part.

In the foregoing embodiment, the plurality of convex ribs are disposed around the bottom surface of the horizontal cover body, so that stability of a supporting structure is ensured. The convex ribs may be rectangular, elliptical, or circular, or may be in another shape. However, it should be ensured that contact surfaces of the convex ribs are flat surfaces and a longitudinal section of the convex ribs is rectangular.

The technical solutions of this application may implement the following beneficial effects.

An electronic device in this application includes: a frame body provided with a sound cavity, where the sound cavity includes a sound inlet and a sound outlet; a receiver, where a sound outlet surface of the receiver covers the sound inlet; and a cover body covering the sound outlet, where a sound outlet channel communicating with the sound cavity is formed between the cover body and the frame body. In this application, the sound outlet channel is not integrated with the cover body, and after the cover body and the frame body are assembled, a gap communicating with the sound cavity is provided between the cover body and the frame body to form the sound outlet channel, so as to significantly reduce a space occupied by the cover body, thereby increasing a size of the display screen and increasing a screen-to-body ratio of the display screen, and user experience is good.

It should be understood that the foregoing general description and the following detailed description are only examples and are not intended to limit this application.

### BRIEF DESCRIPTION OF DRAWINGS

FIG. 1 is a perspective view of an assembly structure of a frame body, a receiver, a cover body, and a display screen of an electronic device according to an embodiment of this application;
FIG. 2 is a cross-sectional view of FIG. 1;
FIG. 3 is a cross-sectional view of a frame body of an electronic device according to an embodiment of this application;
FIG. 4 is a schematic structural diagram of a cover body of an electronic device according to an embodiment of this application;
FIG. 5 is a schematic structural diagram of a supporting part of an electronic device according to an embodiment of this application;
FIG. 6 is a schematic structural diagram of another supporting part provided on a cover body of an electronic device according to an embodiment of this application;
FIG. 7 is a schematic three-dimensional structural diagram of a frame body of an electronic device according to an embodiment of this application;
FIG. 8 is a perspective view of an assembly structure of a frame body, a receiver, and a cover body of an electronic device according to an embodiment of this application; and
FIG. 9 is an exploded view of an electronic device according to an embodiment of this application.

### Reference numerals:

1. Frame body;
11. Vertical part;
111. Vertical slot;
112. Sound outlet channel;
12. Horizontal part;
121. Horizontal slot;
122. Sound cavity;
122a. Sound inlet;
122b. Sound outlet;
122c. Transition plate;
123. Boss;
123a. Horizontal supporting surface;
123b. First inclined surface part;
124. Diversion cavity;
2. Cover body;
21. Horizontal cover body;
211. Convex rib;
22. Vertical cover body;
221. First plate body;
221a. Second inclined surface part;
222. Second plate body;
2221. Supporting part;
2221a. Supporting body;
2221b. Sharp corner part;
2221c. Longitudinal convex strip;
2221d. Connection convex strip;
3. Waterproof breathable film;
4. Display screen;
5. Receiver;
6. First sealing layer;
7. Second sealing layer.

The accompanying drawings herein are incorporated into this specification and form a part of this specification, illustrate the embodiments conforming to this application, and are intended to explain the principles of this application together with this specification.

### DESCRIPTION OF EMBODIMENTS

To help better understand the technical solutions of this application, the following describes the embodiments of this application with reference to the accompanying drawings.

Apparently, the described embodiments are merely some but not all of the embodiments of this application. All other embodiments obtained by a person of ordinary skill in the art based on the embodiments of this application without creative efforts shall fall within the protection scope of this application.

The terms used in the embodiments of this application are merely intended to describe specific embodiments, but not intended to limit this application. The terms "a/an", "the" and "this" of singular forms used in the embodiments and the appended claims of this application are also intended to include plural forms, unless otherwise specified in the context clearly.

It should be understood that the term "and/or" used in this specification describes an association relationship for describing associated objects and represents that three relationships may exist. For example, A and/or B may represent the following three cases: Only A exists, both A and B exist, and only B exists. In addition, the symbol "/" in this specification generally represents an "or" relationship between associated objects.

It should be noted that the directional terms such as "above", "under", "left", and "right" described in the embodiments of this application are described as seen from the angles shown in the accompanying drawings, and should not be understood as limitations to the embodiments of this application. In addition, in the context, it should be further understood that when an element is referred to as being "above" or "under" another element, the element can not only be directly connected "above" or "under" the another element, but also be indirectly connected "above" or "under" the another element through an intermediate element.

An embodiment of this application discloses an electronic device. The electronic device can significantly increase a screen-to-body ratio of a display screen, and user experience is good. The electronic device includes but is not limited to: a mobile phone, a computer, a tablet computer, and the like.

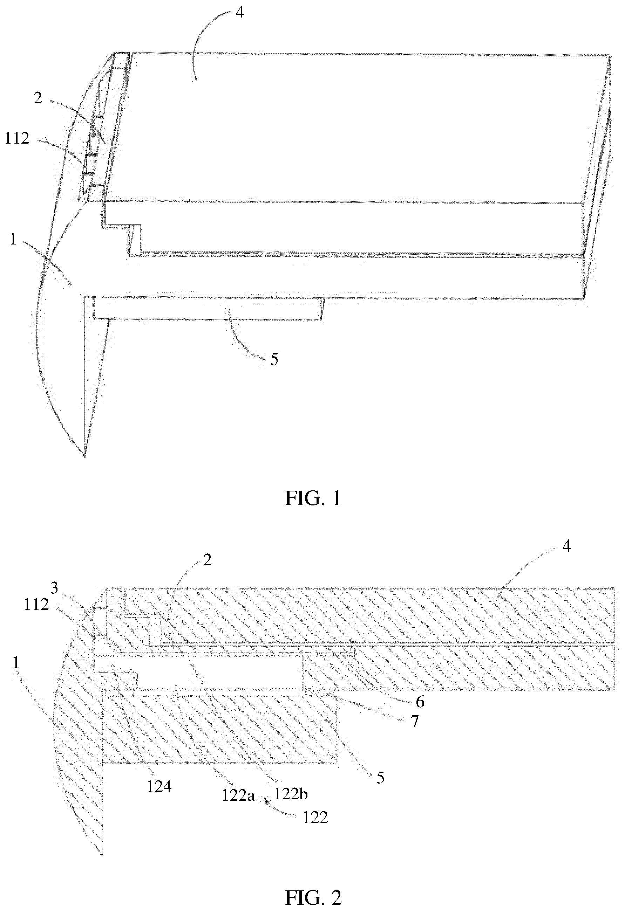

Referring to FIG. 1, the electronic device includes a frame body 1, a receiver 5, a cover body 2, and a display screen 4. The receiver 5 is connected to a side of the frame body 1 and configured to generate sound. The cover body 2 is connected to a side of the frame body 1 facing away from the receiver 5. The display screen 4 is connected to the cover body 2 and a side of the frame body 1 facing away from the receiver 5.

In the prior art, sound generated by a receiver 5 is transmitted by using a channel in a cover body 2. Because the channel is provided on the cover body 2, the cover body 2 occupies a relatively large space, resulting in limitation on a size of the display screen 4 and difficulty in increasing a screen-to-body ratio of the display screen.

The electronic device provided in this embodiment of this application can resolve the foregoing technical problem by using a new assembly structure.

Specifically, FIG. 2 is a cross-sectional view of FIG. 1. The frame body 1 is provided with a sound cavity 122, where the sound cavity 122 includes a sound inlet 122a and a sound outlet 122b. A sound outlet surface of the receiver 5 covers the sound inlet 122a. The cover body 2 covers the sound outlet 122b, where a sound outlet channel 112 communicating with the sound cavity 122 is formed between the cover body 2 and the frame body 1. The display screen 4 is connected to the cover body 2 and a side of the frame body 1 away from the receiver 5.

In this embodiment of this application, the sound outlet channel 112 is not provided on the cover body 2, and after the cover body 2 and the frame body 1 are assembled, a gap is provided between the cover body and the frame body to form the sound outlet channel 112, so as to significantly reduce a space occupied by the cover body 2, thereby increasing a size of the display screen 4. This assembly structure is particularly adapted to design of a full-screen mobile phone.

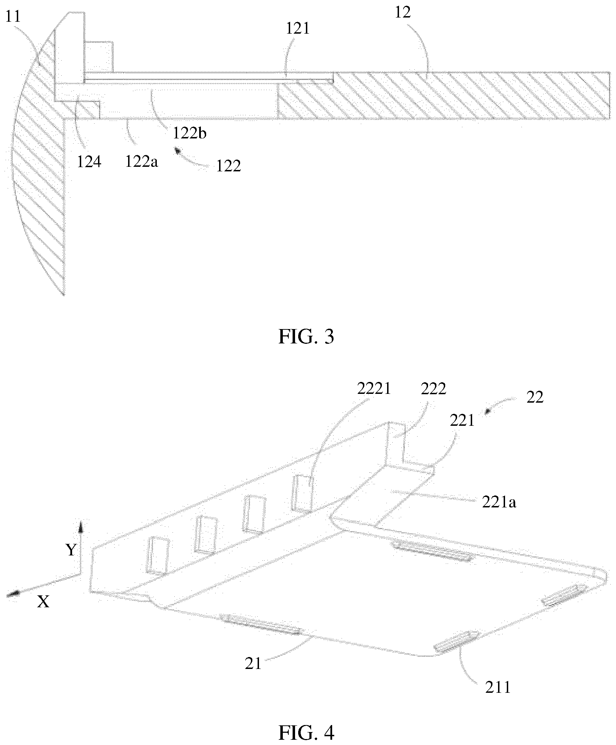

In a possible embodiment, referring to FIG. 3, the frame body 1 includes a vertical part 11 and a horizontal part 12 that are connected to each other. The sound cavity 122 is provided on the horizontal part 12. Referring to FIG. 2, the cover body 2 and the vertical part 11 form the sound outlet channel 112. The cover body 2 and the vertical part 11 cooperate to enable the formed sound outlet channel 112 to be substantially perpendicular to the display screen 4 but not inclined, so as to avoid that when a user uses the electronic device, the sound outlet channel 112 leaves an ear, and the user complains about small sound and poor sound reception of the electronic device.

In a possible embodiment, referring to FIG. 4, the cover body 2 includes a vertical cover body 22 and a horizontal cover body 21 that are connected to each other. Referring to FIG. 2 and FIG. 3, the horizontal cover body 21 covers at least a part of the sound outlet 122b, and the sound outlet channel 112 is formed between the vertical cover body 22 and the vertical part 11.

In this embodiment, after the cover body 2 is assembled on the frame body 1, the vertical cover body 22 and the vertical part 11 cooperate to form the sound outlet channel 112 perpendicular to the display screen 4, so that it can be ensured to the maximum extent that the user clearly receives sound generated by the receiver.

In a possible embodiment, supporting parts 2221 are provided on either of the vertical cover body 22 and the vertical part 11, and the supporting parts 2221 are disposed between the vertical cover body 22 and the vertical part 11 in a supporting manner. In this embodiment, the supporting parts 2221 are disposed between the vertical cover body 22 and the vertical part 11 to support the vertical cover body and the vertical part, and a gap with a specific width is reserved to form the sound outlet channel 112. With arrangement of the supporting parts 2221, reliability of the sound outlet channel 112 in a deformation process is enhanced, and a stable structure of the sound outlet channel 112 between the vertical cover body 22 and the vertical part 11 is ensured.

Specifically, referring to FIG. 4, the electronic device in this embodiment of this application includes a plurality of supporting parts 2221, where in a length direction (X) of the vertical cover body 22, the plurality of supporting parts 2221 are arranged at intervals.

Referring to a coordinate system in FIG. 4, the X axis of the coordinate system is the length direction of the vertical cover body 22.

In this embodiment, the plurality of supporting parts 2221 are arranged on the vertical cover body 22 at intervals, so that the vertical cover body 22 cooperates with the vertical part 11 in a supported manner on a plurality of positions, structural stability between the vertical cover body 22 and the vertical part 11 is ensured, and deformation hardly occurs.

A longitudinal section of the supporting parts 2221 is rectangular. Considering that the supporting parts 2221 are located on the sound outlet channel 112, to reduce sound loss caused by the supporting parts 2221 in a sound transmission process, a sectional dimension of the supporting parts is designed to increase linearly, so that acoustic resistance does not change suddenly.

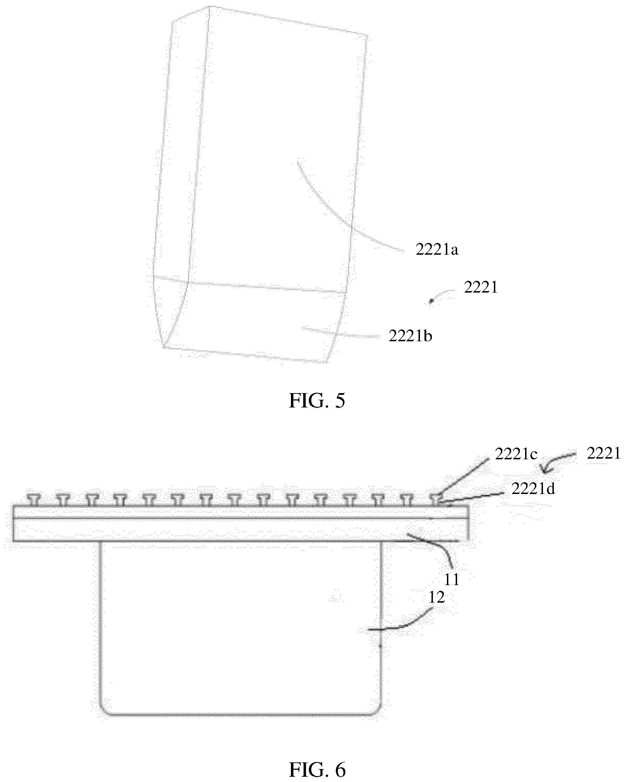

In a possible embodiment, referring to FIG. 5, the supporting part 2221 includes a supporting body 2221a, where the supporting body 2221a extends in a direction perpendicular to the horizontal cover body 21.

A sharp corner part 2221b is provided on an end of the supporting body 2221a close to the horizontal cover body 21.

Specifically, surfaces of two sides of the end of the supporting body 2221a close to the horizontal cover body 21 include and converge towards each other to form the sharp corner part 2221b. Two side surfaces of the sharp corner part 2221b are arc surfaces, and a longitudinal section profile line of the sharp corner part 2221b is a top-opening parabola.

In this embodiment, based on the linear change of the sharp corner part 2221b, the sharp corner part 2221b is further optimized. A fluid mechanics analysis of the acoustic resistance change in the sound outlet channel 112 shows that the acoustic resistance change has a quadratic inverse relationship with the cross-sectional width. Therefore, the sharp corner part at a bottom of the supporting body is designed to be arc-shaped and parabola-shaped, so that an acoustic resistance increase caused by a unit section width increase changes linearly with a height in which the supporting parts 2221 are located.

In a possible embodiment, referring to FIG. 2, the electronic device includes a waterproof breathable film 3.

The waterproof breathable film 3 is connected to the supporting part 2221 and blocks the sound outlet channel 112.

Referring to FIG. 6, the supporting part 2221 may include a longitudinal convex strip 2221c and a connection convex strip 2221d, where the connection convex strip 2221d is connected to the vertical cover body 22, the longitudinal convex strip 2221c is connected to the connection convex strip 2221d, and the waterproof breathable film 3 is connected to the connection convex strips 2221d and the longitudinal convex strips 2221c.

In this embodiment, a cross section of the supporting parts 2221 is T-shaped, bottom end surfaces of the supporting parts 2221 are also T-shaped surfaces, and the waterproof breathable film 3 is connected to the T-shaped surfaces. This structural design increases an area of the supporting parts 2221 in contact with the waterproof breathable film 3 and facilitates connection stability of the waterproof breathable film 3.

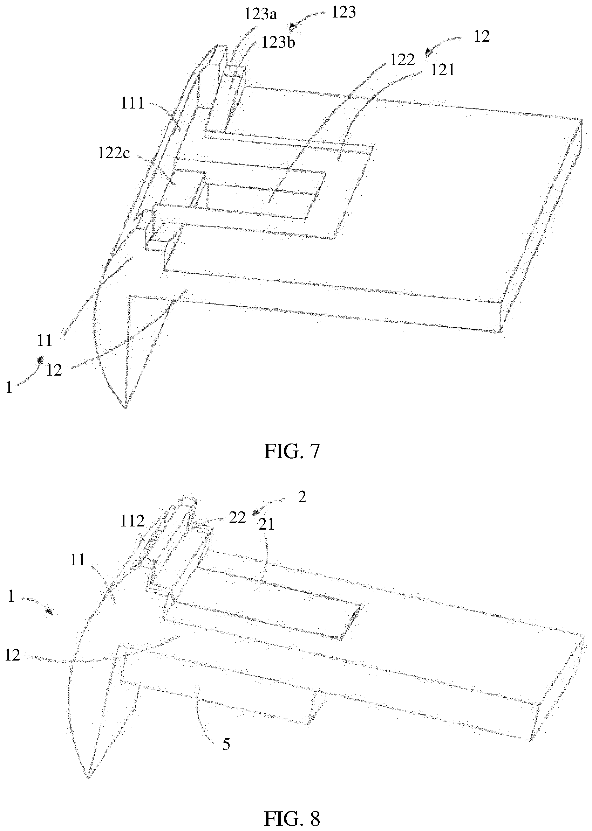

In a possible embodiment, referring to FIG. 7 and FIG. 8, a horizontal slot 121 is provided on the horizontal part 12, and the horizontal cover body 21 is embedded in the horizontal slot 121.

In this embodiment, after the horizontal cover body 21 is embedded and mounted in the horizontal slot 121, an upper surface of the horizontal cover body 21 and an upper surface of the horizontal part 12 are located on a same plane, and the display screen 4 may be mounted on the horizontal cover body 21 and the horizontal part 12 in an attached manner, so that stability of a mounting structure of the display screen is improved.

In a possible embodiment, referring to FIG. 7 and FIG. 8, bosses 123 are provided on the horizontal part 12, and the vertical cover body 22 is supported on the bosses 123.

In this embodiment, the bosses 123 are provided on the horizontal part 12, so that the vertical cover body 22 is supported, and the horizontal cover body 21 is supported on the horizontal slot 121. In this solution, one end of the cover body 2 is supported on the horizontal slot 121, the other end is supported on the bosses 123, and the two ends of the cover body 2 are both supported, so that the cover body 2 is stable in assembly structure, the sound outlet channel 112 formed between the cover body 2 and the vertical part 11 is stable in structure and free from deformation, and sound transmission of the receiver is ensured.

Specifically, referring to FIG. 7, the bosses 123 are provided on an end of the horizontal part 12 close to the vertical part 11 and located on two sides of the horizontal slot 121 respectively. Supporting and cooperating structures are provided on two sides of the vertical cover body 22 respectively, the horizontal cover body 21 is mounted in the horizontal slot 121, and the vertical cover body 22 is supported and mounted on the bosses 123 by using the supporting and cooperating structures.

The bosses 123 are provided with first inclined surface parts 123b. Referring to FIG. 4, the supporting and cooperating structures include second inclined surface parts 221a on the vertical cover body 22, and the second inclined surface parts 221a are supported on the first inclined surface parts 123b in an attached manner. In this embodiment, the bosses 123 support and cooperate with the vertical cover body 22 by using inclined surfaces, so that stability of the mounting structure is higher.

Referring to FIG. 7, specifically, the horizontal part 12 is provided with the two bosses 123 symmetrically provided on two sides of the horizontal slot 121. The boss 123 extends to an edge of the horizontal slot 121 from an edge of the horizontal part 12, and the boss 123 is provided with a horizontal supporting surface 123a located on a side of the horizontal part 12 and a first inclined surface part 123b extending downwards to an edge of the horizontal slot 121 from the horizontal supporting surface 123a.

Referring to FIG. 4, the vertical cover body 22 includes a first plate body 221 and a second plate body 222.

A thickness of the first plate body 221 is greater than that of the second plate body 222. The first plate body 221 is vertically connected to the horizontal cover body 21, and the second plate body 222 is connected to the first plate body 221 on a top edge of the first plate body 221. The second inclined surface parts 221a are provided on the first plate body 221.

Specifically, two ends of the first plate body 221 extend out of the horizontal cover body 21, and the supporting and cooperating structures include the two second inclined surface parts 221a that obliquely extend to an edge of the horizontal cover body 21 from upper surfaces of two sides of the first plate body 221 respectively. The two second inclined surface parts 221a are supported on the two first inclined surface parts 123b respectively, and the horizontal supporting surfaces 123a and the upper surfaces of the first plate body 221 are located on a same plane, so as to jointly support and mount the display screen 4.

In a possible embodiment, referring to FIG. 7 and FIG. 8, a vertical slot 111 is provided on the vertical part 11, the vertical cover body 22 is embedded in the vertical slot 111, and the sound outlet channel 112 is formed between the vertical cover body 22 and a bottom wall of the vertical slot 111.

In this embodiment, the vertical cover body 22 is embedded in the vertical slot 111, and two side wall surfaces of the vertical slot 111 limit the vertical cover body 22 and prevent the vertical cover body 22 from shaking, so as to enhance stability of the assembly structure, protect the vertical cover body 22, and avoid that the vertical cover body 22 is deformed by force, causing the sound outlet channel 112 to deform correspondingly and affecting sound transmission of the receiver 5.

In a possible embodiment, referring to FIG. 2 and FIG. 3, the electronic device further includes a diversion cavity 124, where the diversion cavity 124 is provided in a corner between the horizontal part 12 and the vertical part 11 and communicates with the sound cavity 122 and the sound outlet channel 112.

Specifically, referring to FIG. 7, the sound cavity 122 is provided on a bottom wall of the horizontal slot 121, and a transition plate 122c is provided between the sound cavity 122 and the vertical part 11. A bottom wall of the transition plate 122c and the bottom wall of the horizontal part 12 are located on a same plane, a top wall of the transition plate 122c is lower than the bottom wall of the horizontal slot 121. Referring to FIG. 2, the horizontal cover body 21 is embedded and mounted in the horizontal slot 121, the vertical cover body 22 is embedded and mounted in the vertical slot 111, the horizontal cover body 21 covers the sound outlet 122b of the sound cavity 122, the sound outlet channel 112 is formed between the vertical cover body 22 and the vertical part 11, and the diversion cavity 124 for communicating with the sound cavity 122 and the sound outlet channel 112 is formed between the transition plate 122c and the horizontal cover body 21.

In this embodiment, after being generated by the receiver 5, the sound enters the sound cavity 122 through the sound inlet 122a first, then enters the diversion cavity 124 through the sound outlet 122b, and then is diverted by using the diversion cavity 124, vertically transmitted upwards to the sound outlet channel 112 and transmitted by using the sound outlet channel 112.

In a possible embodiment, referring to FIG. 4, a plurality of convex ribs 211 are provided on a bottom surface of the horizontal cover body 21, and the plurality of convex ribs 211 are supported on the horizontal part 12.

In this solution, the plurality of convex ribs 211 are disposed around the bottom surface of the horizontal cover body 21, so that stability of a supporting structure is ensured. The convex ribs 211 may be rectangular, elliptical, or circular, or may be in another shape. However, it should be ensured that contact surfaces of the convex ribs 211 are flat surfaces and a longitudinal section of the convex ribs 211 is rectangular.

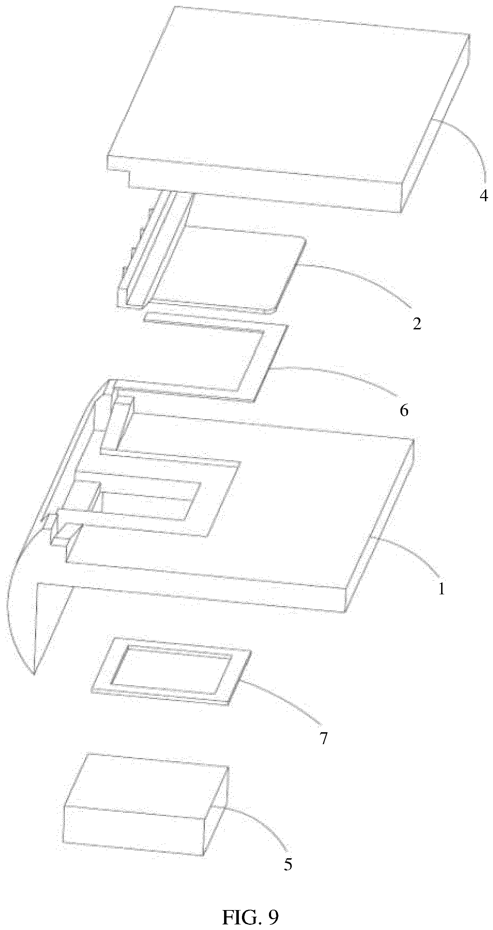

Referring to FIG. 2 and FIG. 9, a first sealing layer 6 is disposed between the frame body 1 and the cover body 2. The first sealing layer 6 is a sealant filled between the horizontal cover body 21 and the horizontal slot 121. In addition, to prevent an upper surface of the cover body from protruding after sealant dispensing, a specific gap needs to be reserved between lower surfaces of the convex ribs 211 and an upper surface of the frame body 1, and the gap is conventionally designed to be 0.05 mm.

Referring to FIG. 2 and FIG. 9, a second sealing layer 7 is disposed between the frame body 1 and the receiver 5.

The second sealing layer 7 is located on a bottom surface of the horizontal part 12 and disposed around the sound inlet 122a.

In a possible embodiment, the second sealing layer 7 is a sealant filled between an edge of the sound inlet 122a and the receiver 5.

In conclusion, the sound outlet channel is not integrated with the cover body 2 of the electronic device in this application, and after the cover body 2 and the frame body 1 are assembled, a gap is provided between the cover body and the frame body to form the sound outlet channel 112, so as to significantly reduce a space occupied by the cover body 2, thereby increasing a size of the display screen 4 and increasing a screen-to-body ratio of the display screen 4, and user experience is good; the sound outlet channel 112 of the electronic device in this application transmits sound perpendicular to the display screen 4, so that a sound reception effect can be ensured for the user to the maximum extent; and the electronic device in this application is provided with the first sealing layer 6 between the frame body 1 and the cover body 2 and provided with the second sealing layer 7 between the frame body and the receiver, and through double-layer sealing, a sealing structure is more reliable.

## Claims

1. An electronic device, comprising:
a frame body (1) provided with a sound cavity (122), wherein the sound cavity (122) comprises a sound inlet (122a) and a sound outlet (122b);
a receiver (5), wherein a sound outlet surface of the receiver (5) covers the sound inlet (122a);
a cover body (2) covering the sound outlet (122b), wherein a sound outlet channel (112) communicating with the sound cavity (122) is formed between the cover body (2) and the frame body (1); and
a display screen (4) connected to the cover body (2) and a side of the frame body (1) facing away from the receiver (5),
wherein the frame body (1) comprises a vertical part (11) and a horizontal part (12) that are connected to each other; and
the sound cavity (122) is provided on the horizontal part (12), and the cover body (2) and the vertical part (11) form the sound outlet channel (112),
wherein the cover body (2) comprises a vertical cover body (22) and a horizontal cover body (21) that are connected to each other;
the horizontal cover body (21) covers at least a part of the sound outlet (122b), and the sound outlet channel (112) is formed between the vertical cover body (22) and the vertical part (11), and
the vertical cover body (22) and the vertical part (11) cooperate to form the sound outlet channel perpendicular to the display screen (4).

2. The electronic device according to claim 1, wherein supporting parts (2221) are provided on either of the vertical cover body (22) and the vertical part (11), and the supporting parts (2221) are disposed between the vertical cover body (22) and the vertical part (11) in a supporting manner.

3. The electronic device according to claim 2, comprising a plurality of supporting parts (2221), wherein in a length direction of the vertical cover body (22), the plurality of supporting parts (2221) are arranged at intervals.

4. The electronic device according to claim 2 or 3, wherein the supporting part (2221) comprises a supporting body (2221a), wherein the supporting body (2221a) extends in a direction perpendicular to the horizontal cover body (21); and
a sharp corner part (2221b) is provided on an end of the supporting body (2221a) close to the horizontal cover body (21).

5. The electronic device according to claim 2 or 3, comprising a waterproof breathable film (3), wherein the waterproof breathable film (3) is connected to the supporting parts (2221) and blocks the sound outlet channel (112).

6. The electronic device according to claim 5, wherein the supporting part (2221) comprises a longitudinal convex strip (2221c) and a connection convex strip (2221d), wherein the connection convex strip (2221d) is connected to the vertical cover body (22), the longitudinal convex strip (2221c) is connected to the connection convex strip (2221d), and the waterproof breathable film (3) is connected to the connection convex strips (2221d) and the longitudinal convex strips (2221c).

7. The electronic device according to any one of claims 1 to 3, wherein a horizontal slot (121) is provided on the horizontal part (12), and the horizontal cover body (21) is embedded in the horizontal slot (121).

8. The electronic device according to any one of claims 1 to 3, wherein bosses (123) are provided on the horizontal part (12), and the vertical cover body (22) is supported on the bosses (123).

9. The electronic device according to claim 8, wherein the bosses (123) are provided with first inclined surface parts (123b), the vertical cover body (22) is provided with second inclined surface parts (221a), and the second inclined surface parts (221a) are supported on the first inclined surface parts (123b) in an attached manner.

10. The electronic device according to claim 9, wherein the vertical cover body (22) comprises a first plate body (221) and a second plate body (222);
a thickness of the first plate body (221) is greater than that of the second plate body (222);
the first plate body (221) is vertically connected to the horizontal cover body (21), and the second plate body (222) is connected to the first plate body (221) on a top edge of the first plate body (221); and
the second inclined surface parts (221a) are provided on the first plate body (221).

11. The electronic device according to any one of claims 1 to 3, wherein a vertical slot (111) is provided on the vertical part (11), the vertical cover body (22) is embedded in the vertical slot (111), and the sound outlet channel (112) is formed between the vertical cover body (22) and a bottom wall of the vertical slot (111).

12. The electronic device according to any one of claims 1 to 3, further comprising a diversion cavity (124), wherein the diversion cavity (124) is provided in a corner between the horizontal part (12) and the vertical part (11) and communicates with the sound cavity (122) and the sound outlet channel (112).

13. The electronic device according to any one of claims 1 to 3, wherein a plurality of convex ribs (211) are provided on a bottom surface of the horizontal cover body (21), and the plurality of convex ribs (211) are supported on the horizontal part (12).

## Patentansprüche

1. Elektronische Vorrichtung, umfassend:
einen Rahmenkörper (1), der mit einem Schallhohlraum (122) versehen ist, wobei der Schallhohlraum (122) einen Schalleintritt (122a) und einen Schallaustritt (122b) umfasst;
einen Empfänger (5), wobei eine Schallaustrittsoberfläche des Empfängers (5) den Schalleintritt (122a) bedeckt;
einen Abdeckkörper (2), der den Schallaustritt (122b) abdeckt, wobei ein Schallaustrittskanal (112), der mit dem Schallhohlraum (122) kommuniziert, zwischen dem Abdeckkörper (2) und dem Rahmenkörper (1) ausgebildet ist; und
einen Anzeigebildschirm (4), der mit dem Abdeckkörper (2) und einer Seite des Rahmenkörpers (1), die von dem Empfänger (5) abgewandt ist, verbunden ist,
wobei der Rahmenkörper (1) ein vertikales Teil (11) und ein horizontales Teil (12), die miteinander verbunden sind, umfasst; und
der Schallhohlraum (122) an dem horizontalen Teil (12) bereitgestellt ist und der Abdeckkörper (2) und das vertikale Teil (11) den Schallaustrittskanal (112) ausbilden,
wobei der Abdeckkörper (2) einen vertikalen Abdeckkörper (22) und einen horizontalen Abdeckkörper (21), die miteinander verbunden sind, umfasst;
der horizontale Abdeckkörper (21) mindestens einen Teil des Schallaustritts (122b) abdeckt und der Schallaustrittskanal (112) zwischen dem vertikalen Abdeckkörper (22) und dem vertikalen Teil (11) ausgebildet ist und
der vertikale Abdeckkörper (22) und das vertikale Teil (11) zusammenwirken, um den Schallaustrittskanal senkrecht zu dem Anzeigebildschirm (4) auszubilden.

2. Elektronische Vorrichtung nach Anspruch 1, wobei Stützteile (2221) an beiden von dem vertikalen Abdeckkörper (22) und dem vertikalen Teil (11) bereitgestellt sind und die Stützteile (2221) zwischen dem vertikalen Abdeckkörper (22) und dem vertikalen Teil (11) in einer stützenden Weise angeordnet sind.

3. Elektronische Vorrichtung nach Anspruch 2, umfassend eine Vielzahl von Stützteilen (2221), wobei, in einer Längsrichtung des vertikalen Abdeckkörpers (22), die Vielzahl von Stützteilen (2221) in Abständen eingerichtet sind.

4. Elektronische Vorrichtung nach Anspruch 2 oder 3, wobei das Stützteil (2221) einen Stützkörper (2221a) umfasst, wobei sich der Stützkörper (2221a) in einer Richtung senkrecht zu dem horizontalen Abdeckkörper (21) erstreckt; und
ein Teil einer scharfen Ecke (2221b) an einem Ende des Stützkörpers (2221a) nahe dem horizontalen Abdeckkörper (21) bereitgestellt ist.

5. Elektronische Vorrichtung nach Anspruch 2 oder 3, umfassend eine wasserdichte atmungsaktive Schicht (3), wobei die wasserdichte atmungsaktive Schicht (3) mit den Stützteilen (2221) verbunden ist und den Schallaustrittskanal (112) blockiert.

6. Elektronische Vorrichtung nach Anspruch 5, wobei das Stützteil (2221) einen Längskonvexstreifen (2221c) und einen Verbindungskonvexstreifen (2221d) umfasst, wobei der Verbindungskonvexstreifen (2221d) mit dem vertikalen Abdeckkörper (22) verbunden ist, der Längskonvexstreifen (2221c) mit dem Verbindungskonvexstreifen (2221d) verbunden ist und die wasserdichte atmungsaktive Schicht (3) mit den Verbindungskonvexstreifen (2221d) und den Längskonvexstreifen (2221c) verbunden ist.

7. Elektronische Vorrichtung nach einem der Ansprüche 1 bis 3, wobei ein horizontaler Schlitz (121) an dem horizontalen Teil (12) bereitgestellt ist und der horizontale Abdeckkörper (21) in den horizontalen Schlitz (121) eingebettet ist.

8. Elektronische Vorrichtung nach einem der Ansprüche 1 bis 3, wobei runde Vorsprünge (123) an dem horizontalen Teil (12) bereitgestellt sind und der vertikale Abdeckkörper (22) auf den runden Vorsprüngen (123) abgestützt ist.

9. Elektronische Vorrichtung nach Anspruch 8, wobei die Vorsprünge (123) mit ersten geneigten Oberflächenteilen (123b) versehen sind, der vertikale Abdeckkörper (22) mit zweiten geneigten Oberflächenteilen (221a) versehen ist und die zweiten geneigten Oberflächenteile (221a) auf den ersten geneigten Oberflächenteilen (123b) in einer befestigten Weise abgestützt sind.

10. Elektronische Vorrichtung nach Anspruch 9, wobei der vertikale Abdeckkörper (22) einen ersten Plattenkörper (221) und einen zweiten Plattenkörper (222) umfasst;
eine Dicke des ersten Plattenkörpers (221) größer als die des zweiten Plattenkörpers (222) ist;
der erste Plattenkörper (221) mit dem horizontalen Abdeckkörper (21) vertikal verbunden ist und der zweite Plattenkörper (222) an einer Oberkante des ersten Plattenkörpers (221) mit dem ersten Plattenkörper (221) verbunden ist; und
die zweiten geneigten Oberflächenteile (221a) an dem ersten Plattenkörper (221) bereitgestellt sind.

11. Elektronische Vorrichtung nach einem der Ansprüche 1 bis 3, wobei ein vertikaler Schlitz (111) an dem vertikalen Teil (11) bereitgestellt ist, der vertikale Abdeckkörper (22) in den vertikalen Schlitz (111) eingebettet ist und der Schallaustrittskanal (112) zwischen dem vertikalen Abdeckkörper (22) und einer unteren Wand des vertikalen Schlitzes (111) ausgebildet ist.

12. Elektronische Vorrichtung nach einem der Ansprüche 1 bis 3, ferner umfassend einen Umleitungshohlraum (124), wobei der Umleitungshohlraum (124) in einer Ecke zwischen dem horizontalen Teil (12) und dem vertikalen Teil (11) bereitgestellt ist und mit dem Schallhohlraum (122) und dem Schallaustrittskanal (112) kommuniziert.

13. Elektronische Vorrichtung nach einem der Ansprüche 1 bis 3, wobei eine Vielzahl von Konvexrippen (211) an einer unteren Oberfläche des horizontalen Abdeckkörpers (21) bereitgestellt ist und die Vielzahl von Konvexrippen (211) auf dem horizontalen Teil (12) abgestützt ist.

## Revendications

1. Dispositif électronique, comprenant :
un corps de cadre (1) pourvu d'une cavité sonore (122), la cavité sonore (122) comprenant une entrée sonore (122a) et une sortie sonore (122b) ;
un récepteur (5), une surface de sortie sonore du récepteur (5) couvrant l'entrée sonore (122a) ;
un corps de couverture (2) couvrant la sortie sonore (122b), un canal de sortie sonore (112) communiquant avec la cavité sonore (122) étant formé entre le corps de couverture (2) et le corps de cadre (1) ; et
un écran d'affichage (4) relié au corps de couverture (2) et à un côté du corps de cadre (1) orienté à l'écart du récepteur (5),
le corps de cadre (1) comprenant une partie verticale (11) et une partie horizontale (12) qui sont reliées l'une à l'autre ; et
la cavité sonore (122) étant fournie sur la partie horizontale (12), et le corps de couverture (2) et la partie verticale (11) formant le canal de sortie sonore (112),
le corps de couverture (2) comprenant un corps de couverture vertical (22) et un corps de couverture horizontal (21) qui sont reliés l'un à l'autre ;
le corps de couverture horizontal (21) couvrant au moins une partie de la sortie sonore (122b), et le canal de sortie sonore (112) étant formé entre le corps de couverture vertical (22) et la partie verticale (11), et
le corps de couverture vertical (22) et la partie verticale (11) coopérant pour former le canal de sortie sonore perpendiculaire à l'écran d'affichage (4).

2. Dispositif électronique selon la revendication 1, dans lequel des parties de support (2221) sont fournies sur l'un ou l'autre parmi le corps de couverture vertical (22) et la partie verticale (11), et les parties de support (2221) sont disposées entre le corps de couverture vertical (22) et la partie verticale (11) d'une manière supportée.

3. Dispositif électronique selon la revendication 2, comprenant une pluralité de parties de support (2221), dans lequel dans une direction en longueur du corps de couverture vertical (22), la pluralité de parties de support (2221) sont agencées à des intervalles.

4. Dispositif électronique selon la revendication 2 ou 3, dans lequel la partie de support (2221) comprend un corps de support (2221a), le corps de support (2221a) s'étendant dans une direction perpendiculaire au corps de couverture horizontal (21) ; et
une partie à angle vif (2221b) est fournie sur une extrémité du corps de support (2221a) près du corps de couverture horizontal (21).

5. Dispositif électronique selon la revendication 2 ou 3, comprenant un film imperméable et respirant (3), le film imperméable et respirant (3) étant relié aux parties de support (2221) et bloquant le canal de sortie sonore (112).

6. Dispositif électronique selon la revendication 5, dans lequel la partie de support (2221) comprend une bande convexe longitudinale (2221c) et une bande convexe de liaison (2221d), la bande convexe de liaison (2221d) étant reliée au corps de couverture vertical (22), la bande convexe longitudinale (2221c) étant reliée à la bande convexe de liaison (2221d), et le film imperméable et respirant (3) étant relié aux bandes convexes de liaison (2221d) et aux bandes convexes longitudinales (2221c).

7. Dispositif électronique selon l'une quelconque des revendications 1 à 3, dans lequel une fente horizontale (121) est fournie sur la partie horizontale (12), et le corps de couverture horizontal (21) est intégré dans la fente horizontale (121).

8. Dispositif électronique selon l'une quelconque des revendications 1 à 3, dans lequel des bossages (123) sont fournis sur la partie horizontale (12), et le corps de couverture vertical (22) est supporté sur les bossages (123).

9. Dispositif électronique selon la revendication 8, dans lequel les bossages (123) sont pourvus de premières parties de surface inclinées (123b), le corps de couverture vertical (22) est pourvu de secondes parties de surface inclinées (221a), et les secondes parties de surface inclinées (221a) sont supportées sur les premières parties de surface inclinées (123b) d'une manière fixée.

10. Dispositif électronique selon la revendication 9, dans lequel le corps de couverture vertical (22) comprend un premier corps de plaque (221) et un second corps de plaque (222) ;
une épaisseur du premier corps de plaque (221) est supérieure à celle du second corps de plaque (222) ;
le premier corps de plaque (221) est relié verticalement au corps de couverture horizontal (21), et le second corps de plaque (222) est relié au premier corps de plaque (221) sur un bord supérieur du premier corps de plaque (221) ; et
les secondes parties de surface inclinées (221a) sont fournies sur le premier corps de plaque (221).

11. Dispositif électronique selon l'une quelconque des revendications 1 à 3, dans lequel une fente verticale (111) est fournie sur la partie verticale (11), le corps de couverture vertical (22) est intégré dans la fente verticale (111), et le canal de sortie sonore (112) est formé entre le corps de couverture vertical (22) et une paroi inférieure de la fente verticale (111).

12. Dispositif électronique selon l'une quelconque des revendications 1 à 3, comprenant en outre une cavité de dérivation (124), la cavité de dérivation (124) étant fournie dans un coin entre la partie horizontale (12) et la partie verticale (11) et communiquant avec la cavité sonore (122) et le canal de sortie sonore (112).

13. Dispositif électronique selon l'une quelconque des revendications 1 à 3, dans lequel une pluralité de nervures convexes (211) sont fournies sur une surface inférieure du corps de couverture horizontal (21), et la pluralité de nervures convexes (211) sont supportées sur la partie horizontale (12).
